# EUROPEAN PATENT SPECIFICATION

(11) **EP 4 341 220 B1**
(45) Date of publication and mention of the grant of the patent: **22.10.2025**
(21) Application number: 23710051.6
(22) Date of filing: 13.03.2023
(51) Int. Cl.: C02F 3/28, C02F 1/467, B01D 53/52, C02F 101/10, B01D 53/96

(54) **A METHOD FOR PURIFYING SULPHATE CONTAINING WASTEWATER AND RECOVERING SULPHUR AND HYDROGEN**
VERFAHREN ZUR REINIGUNG VON SULFATHALTIGEN ABWÄSSERN UND RÜCKGEWINNUNG VON SCHWEFEL UND WASSERSTOFF
PROCÉDÉ DE PURIFICATION DES EAUX USÉES CONTENANT DU SULFATE ET DE RÉCUPÉRATION DU SOUFRE ET DE L'HYDROGÈNE

(30) Priority: 14.03.2022 EP 22161889
(43) Date of publication of application: 27.03.2024
(73) Proprietor: NG Nordic Finland Oy, 11120 Riihimäki (FI)
(72) Inventor: WILLQUIST, Karin, 02150 Espoo (FI); VON KRONHELM, Thomas, 02150 Espoo (FI); NILSSON, Charlotte, 02150 Espoo (FI); LOTHGREN, Carl-Johan, 02150 Espoo (FI)
(74) Representative: Laine IP Oy
(86) International application number: PCT/EP2023/056363
(87) International publication number: WO 2023/174880

(56) References cited:
- WO-A1-2015/084579
- WO-A2-2014/104877
- CN-A- 111 689 659
- SELVARAJ HOSIMIN ET AL: "An integrated biological and electrochemical process for recovery of sulfur from an industrial effluent contaminated pond water and its preliminary application in high performance battery", SEPARATION AND PURIFICATION TECHNOLOGY, vol. 180, 27 February 2017 (2017-02-27), pages 133 - 141, XP029951667, ISSN: 1383-5866, DOI: 10.1016/J.SEPPUR.2017.01.069
- ILJE PIKAAR ET AL: "Electrochemical sulfide oxidation from domestic wastewater using mixed metal-coated titanium electrodes", WATER RESEARCH, ELSEVIER, AMSTERDAM, NL, vol. 45, no. 17, 25 July 2011 (2011-07-25), pages 5381 - 5388, XP028298308, ISSN: 0043-1354, [retrieved on 20110806], DOI: 10.1016/J.WATRES.2011.07.033

## Description

### FIELD OF THE INVENTION

The present invention relates to purification of sulphate containing wastewater as well as to a system for carrying out the purification method.

### BACKGROUND AND OBJECTS OF THE INVENTION

Several industries, such as pulp and paper, mining and metal-refining industries generate wastewaters that comprise, among other, sulphates. It is more and more undesirable to allow such wastewaters to be released to the nature, be it rivers, lakes or the sea. Indeed, sulphates contribute to eutrophication as well as decreased biodiversity in fresh-water bodies. Thus, also regulations concerning sulphate emissions become stricter with time.

Another problem in such industries, especially in processes requiring large amounts of water, is that there is an increasing demand to recycle the process water, instead of using fresh water.

Presently known wastewater treatments that concentrate on removal of sulphates typically use chemical precipitation. The process has however the disadvantage of creating large amounts of chemical sludge. The chemical sludge binds water, thus it is difficult to dispose of, as landfill regulations limit its disposal as landfilling material. Another possible way to treat sulphate containing wastewaters is membrane technology combined with evaporation. However, such processes have a high capital expenditure (CAPEX) cost due to the combined set up of membrane and evaporation, but the process also requires a significant amount of energy, while generating sulphate salt flakes of rather limited commercial use. In addition, most sulphate salts are highly soluble and cannot be disposed of in normal landfills.

Several wastewater treatment processes and methods exists, but there is still a need to provide specifically a process for removing sulphates in an efficient manner, as well as with low amount of waste, or even no waste (waste meaning a product that cannot be used in another process). Preferably, such process would also be cost-efficient, cost meaning costs of additives used in the process as well as the equipment and energy required. CN111689659 and SELVARAJ HOSIMIN ET AL ("An integrated biological and electrochemical process for recovery of sulfur from an industrial effluent contaminated pond water and its preliminary application in high performance battery",SEPARATION AND PURIFICATION TECHNOLOGY, vol. 180 , pages 133-141) are relevant documents for sulphur recovery from wastewater.

A primary aim of the present invention is thus to provide an efficient method for purifying sulphate containing wastewaters, which produces a low amount, or even no waste. Additionally, a further aim is to provide such a process, which is both energy- and cost efficient.

### SUMMARY OF THE INVENTION

The present invention relates to a method for purifying sulphate containing wastewater and recovering sulphur and hydrogen, as well as to a system for carrying out the method, as described in the independent claims.

A typical method for purifying sulphate containing wastewater and recovering sulphur and hydrogen comprises
- in an anaerobic bioreactor, converting sulphates in the sulphate containing wastewater to hydrogen sulphide, using sulphate reducing microorganisms and an electron donor, a phosphate source and a nitrogen source;
- in a stripping arrangement, stripping the hydrogen sulphide into a gas phase using an inert gas;
- in a scrubber arrangement, converting the hydrogen sulphide containing gas 10 phase to a sulphide salt, using a hydroxide;
- subjecting the sulphide salt to electrolysis; and
- recovering hydrogen gas, hydroxide and sulphur from the electrolysis,

wherein in the electrolysis, the anode is a nickel, titanium or platinum electrode, and the cathode is a nickel, titanium or platinum electrode,
wherein in the electrolysis, elemental sulphur is recovered at the anode, and hydrogen gas is recovered at the cathode, and
wherein the system is controlled so that the potential against an Ag/AgCl reference electrode is at a stable level with the value within the range of 300-500 mV.

A typical system for carrying out the above method comprises
- an anaerobic bioreactor comprising an inlet for the wastewater, an inlet for the electron donor, an inlet for the phosphate source, an inlet for the nitrogen source, an inlet for microorganisms and an outlet for a liquid comprising hydrogen sulphide;
- a stripping arrangement comprising an inlet for the liquid comprising hydrogen sulphide, an inlet for the inert gas, an outlet for a gas mixture comprising hydrogen sulphide and the inert gas, and an outlet for treated wastewater;
- a scrubber arrangement comprising an inlet for the gas mixture comprising hydrogen sulphide and the inert gas, an inlet for the hydroxide, an outlet for a carrier gas mainly consisting of the inert gas, and an outlet for the liquid comprising sulphide salt;
- an electrolytic cell comprising an inlet for the liquid comprising sulphide salt, an outlet for sulphur, an outlet for hydroxide and an outlet for hydrogen; and
- means for recycling the hydroxide from the electrolytic cell to the scrubber arrangement,

wherein in the electrolytic cell the anode is a nickel, titanium or platinum electrode, and the cathode is a nickel, titanium or platinum electrode,
wherein in the electrolytic cell, elemental sulphur is recovered at the anode, and hydrogen gas is recovered at the cathode, and
wherein the system is controlled so that the potential against an Ag/AgCl reference electrode is at a stable level with the value within the range of 300-500 mV.

### BRIEF DESCRIPTION OF THE DRAWINGS

Figure 1 schematically illustrates a system according to an embodiment.
Figure 2 schematically illustrates a system according to another embodiment.

### DETAILED DESCRIPTION OF THE INVENTION

The present invention relates to a method for purifying sulphate-containing wastewater and recovering sulphur and hydrogen, comprising
- in an anaerobic bioreactor, converting sulphates in the sulphate containing wastewater to hydrogen sulphide, using sulphate reducing microorganisms and an electron donor, a phosphate source and a nitrogen source;
- in a stripping arrangement, stripping the hydrogen sulphide into a gas phase using an inert gas;
- in a scrubber arrangement, converting the hydrogen sulphide containing gas phase to a sulphide salt, using a hydroxide;
- subjecting the sulphide salt to electrolysis; and
- recovering hydrogen gas, hydroxide and sulphur from the electrolysis,

wherein in the electrolysis, the anode is a nickel, titanium or platinum electrode, and the cathode is a nickel, titanium or platinum electrode,
wherein in the electrolysis, elemental sulphur is recovered at the anode, and hydrogen gas is recovered at the cathode, and
wherein the system is controlled so that the potential against an Ag/AgCl reference electrode is at a stable level with the value within the range of 300-500 mV.

The present method thus provides a process for efficiently retrieving sulphates from wastewater, while at the same time producing sulphur and hydrogen gas as well as a low amount or no waste. By wastewater, for example process waters are meant, i.e. any water that contains sulphates that cannot be recirculated to the process, or released to a recipient. A stripping arrangement may be for example one or more stripping towers, as known in the art. If for example two stripping towers are used, they are typically arranged in series. In this description, the terms "stripping tower" and "stripping arrangement" can be used interchangeable. A scrubber arrangement can also comprise one or more scrubbers, such as two scrubbers. If more than one scrubber is used, they are typically arranged in series. In this description, the terms "scrubber" and "scrubber arrangement" can be used interchangeably.

The process is, according to an embodiment and after an initial load, practically self-sufficient in hydroxide, as hydroxide is circulated in the process, i.e. the method comprises recycling the hydroxide from the electrolysis to the scrubber arrangement. This means that the process is self-supporting regarding demand of hydroxide and thereby also cost-efficient. The method can thus also be used for manufacturing for instance disodium sulphide and elemental sulphur, which can be used as raw substance in many different industrial applications. For instance, sulphur can be converted to sulphuric acid, which is often required for the processes generating the sulphate containing wastewater. The present invention thus allows reducing the amount of chemical compounds needed in such industrial processes, as it provides an efficient re-circulation of these compounds. Furthermore, only very limited amounts of waste are generated in the process. Still further, the process allows production of hydrogen gas in an energy efficient manner.

The present method is based on a biological process of reducing sulphates to sulphides, using anaerobic microorganisms. The sulphur is then created by electrolysis.

The microorganisms convert the sulphates to hydrogen sulphide, which is stripped to gas phase using an inert gas, typically nitrogen gas, in a stripping arrangement. The liquid led from the bioreactor to the stripping arrangement may comprise also other sulphide species, in addition to H₂S(aq), such as HS⁻(aq) and S²⁻(aq). The liquid, once stripped, is preferably recirculated from the stripping arrangement back to the bioreactor, that is, the stripping arrangement is placed in a recirculation loop of the bioreactor. pH is controlled in the stripping arrangement by addition of an acid.

Thereafter, the hydrogen sulphide is converted to a sulphide salt in the scrubber arrangement, using a hydroxide. The hydroxide can be for example sodium hydroxide (NaOH), potassium hydroxide (KOH) or lithium hydroxide (LiOH(H₂O)ₙ). If necessary, the scrubber arrangement consists of two scrubbers connected in series. The purpose with the first scrubber is to trap carbon dioxide. The first scrubber may in this case have an operational pH of approximately 6-9, and the first scrubber is regenerated by lowering the pH and thereafter the pH is raised to operational pH using hydroxides produced in the electrolysis. According to an embodiment, in the second scrubber (which is the main scrubber) or in some installations the only scrubber in use, hydroxide is used at a concentration of 5-20 wt-%. The pH of the second scrubber may be around 12, for example. The first scrubber in this case can be a carbonate collection reactor, into which the gas comprising sulphide and carbon dioxide is directed. The precipitation reaction forming inorganic carbon species such as CO₂ (aq), CO₃ (aq) and HCO₃ (aq), calcium carbonate and/or calcium bicarbonate or mixture thereof is carried out for a period of time, and the precipitate removed. A precipitation step may also be arranged between the scrubber arrangement and the electrolysis, wherein a precipitate of calcium carbonate and/or calcium bicarbonate is formed. The precipitate can be recovered, for example by filtration, and either used further or disposed of as landfill.

The obtained sulphide solution contains typically 2-18 wt-% of for instance disodium sulphide. This can be used as a product or oxidised through the electrolysis. In case the disodium sulphide is used in further production, for example in water treatment or as a reducing agent, it typically does not need to be further purified or concentrated, as the obtained disodium sulphide is sufficiently clean and concentrated for such further uses.

According to an embodiment, the obtained sulphide solution contains 1-18 wt-%, such as 1-10 wt-%, such as 1-5 wt-%, for example 1-3 wt-% of for instance disodium sulphide. The obtained sulphide solution may also contain 0-6 wt-% CO₃, and 2-12 wt-% Na.

According to an embodiment, the obtained sulphide solution contains 1-10 wt-%, such as 2-10 wt-%, for example 3-10 wt-% or 2-5 wt-% or 3-5 wt-% of for instance disodium sulphide. The obtained sulphide solution may also contain 0-6 wt-% CO₃, and 2-12 wt-% Na.

However, sulphide is a heavily reduced molecule and as such it also contains a lot of energy, which can be recovered as hydrogen using electrolysis. Therefore, the sulphide is preferably lead to electrolysis, where hydrogen and sulphur are recovered, as well as hydroxide. It is believed that more energy is recovered as hydrogen than is added as electricity into the electrolysis, the theoretical potential being four times. The electrolysis cell thus also generates hydrogen that can be converted to electricity to be used for example in the process itself or in another application.

The method further provides elemental sulphur, which can be either used as such, for example as fertilizer (i.e. as suspended sulphur) or it may be converted to sulphuric acid and used in metal refineries in the metal leaching process.

This process generates waste either if i) inherent high Ca in the process water fed to the bioreactor result since this generate a CaCO₃ precipitate, or ii) if the unrecovered sulphide in the bioprocess effluent water is removed through metal sulphide precipitation. In any case, the amount of waste is significantly less than in the methods of prior art. For example, in ettringite precipitation, 4.5 g chemical sludge (dry weight) is generated per gram sulphate removed.

Finally, minor amount of cell biomass and sulphide precipitates are generated in the bioprocess (for example, 0.1-2 kg/m³ dry weight or 0.6-1 g sludge per g sulphate removed). The quantities of biomass generated are approximately 10-50% less in the present process than in a sulphate reduction bioprocess where the generated sulphide species are oxidised to elemental sulphur using an additional bioreactor of aerobic sulphide oxidation microorganisms. The oxidative biological step will generate additional sludge (for example approximately 0.6 g COD/gS). The overall operational cost is also decreased since the amount of input chemicals such as the hydroxide is significantly decreased.

The anaerobic bioreactor is preferably a carrier-based solid bed reactor, comprising a suitable carrier for biofilm formation, having a high area/volume, such as 750-900 m²/m³ of the carrier. For example, it is possible to use carriers such as K5 carriers (from Veolia), AA64 carriers (from Ingenjörsfirma Anders Löfqvist), and any type of pumice stones.

The phosphate and nitrogen in the bioreactor are required as inorganic nutrients for the sulphate reducing bacteria (SRB) of the bioreactor. The phosphate source and the nitrogen source can be one compound or they can be different compounds. Also a mixture of various sources can be used. They can be fed for example in the form of diammonium phosphate. It is also possible to use different sources of phosphate and nitrogen, such as urea, ammonium phosphate and calcium phosphate or NPK fertilizer (i.e. Yara). The consumption of phosphate and nitrogen is dependent on the bacteria used, as well as on other process conditions and the nature of the wastewater purified. Trace amounts of minerals and salts such as potassium, iron, Zn, Mn, Mg etc are generally present in the waste water but can be added separately if deficient.

According to an embodiment, the stripping arrangement is operated at essentially the same temperature as the bioreactor. It is also possible to arrange a heat exchanger between the bioreactor and the stripping arrangement. Both the stripping and scrubber arrangements are preferably operated in continuous mode. The scrubber arrangement is preferably operated in same temperature as the bioreactor. The required liquid resident time of the scrubber can be for example 2-10 h and the volume may be 100 folds smaller than the bioreactor. The required residence time of the electrolysis is typically 20-60 minutes and thereby the volume of the electrolysis cell can be 1000 folds smaller than the bioreactor.

The electrolysis cell can be operated at both batch and continuous mode with or without membranes. In the electrolysis cell, the sulphide solution is oxidised at the anode to form elemental sulphur. The hydrogen production at the cathode (made for example of titanium or platinum) uses the electrons from sulphide oxidation as well as electricity. The generation is very energy efficient, using 5-20 kWh/kg of hydrogen. The electrolysis also increases the concentration of hydroxide. The liquid phase thus contains recovered hydroxide that can be recycled into the scrubber arrangement and thereby reduce or even completely remove the need for external addition of hydroxide, after the initial loading.

According to an embodiment the electrolysis is operated in a continuous mode with a continuous flow, preferably at ambient temperature and ambient pressure without need for heating or cooling. In the electrolysis cell, the sulphide solution is oxidised at the anode to form elemental sulphur. The hydrogen production at the cathode uses the electrons from sulphide oxidation as well as electricity. Typically, the liquid inlet is at the bottom of the liquid, and the liquid outlet is at the top of the liquid. The electrolysis is not sensitive to high salinity. A high concentration of sulphide in the scrubber may make the process compact and volume effective (2-8 g sulphur per liter). The sulphur produced from the electrolysis is typically >98% pure since it is the only solid product produced during the electrolysis. This may be obtained since the system is controlled so that the potential against an Ag/AgCl reference electrode is at a stable level with the value within the range of 300-500 mV, preferably 350-400 mV and most preferably at 360 mV. This may enable that only elemental sulphur is formed and not polysulphide, thiosulphates or sulphate. Nickel, titanium or platinum electrode at the anode enables sulphur build up on the anode. The sulphur can be harvested when sulphide removal is monitored to be between 20-70 wt-%. The hydrogen is produced at the cathode made of nickel, titanium or platinum, and it uses the electrons from sulphide oxidation as well as electricity. Since typically hydrogen is the only gas produced during the electrolysis, it is produced in an already pure form and there is no need for additional gas upgrading, making the process cost efficient.

According to an embodiment, the electron donor is selected from a group consisting of methanol, ethanol, formate, acetate, lactate and mixtures thereof. Other suitable compounds can also be used. According to an embodiment, the concentration of the electron donor is 0.68-1.5 g / g SO₄²⁻. The concentration can be for example from 0.68, 0.8, 0.9, 1, 1.1, 1.2 or 1.3 g/ g SO₄²⁻ up to 0.8, 0.9, 1, 1.1, 1.2 or 1.3 g/ g SO₄²-

According to an embodiment, the pH within the bioreactor is 4.0-9.0. Typically, once the bioreactor has been in use for a certain period of time, the pH is in a range of 6.3-8.3. The pH can be for example from 4.0, 4.5, 5.0, 5.5, 6.0, 6.3, 7.0 or 7.5 up to 5.0, 5.5, 6.0, 6.3, 7.0, 7.5, 8.0, 8.3, 8.5 or 9.0. The pH may be adjusted for example using hydrochloric acid (HCl), sulphuric acid (H₂SO₄) or sodium hydroxide (NaOH). These can be used for example in a concentration of 5 wt-%. pH may for example need to be reduced to increase the efficiency of stripping, while pH may need to be increased when starting the reaction.

According to another embodiment, the temperature within the bioreactor is 2-35 °C. One suitable range for the temperature of the bioreactor is 5-15 °C. The temperature can be for example from 2, 3, 4, 5, 6, 8, 10, 12, 15, 18, 20, 22 or 25 °C up to 4, 5, 6, 8, 10, 12, 15, 18, 20, 22, 25, 27, 28, 29, 30, 31, 32, 33, 34 or 35 °C.

The sulphate reducing microorganism may be selected from a group consisting of species of the genera Desulfovibrio, Desulfotomaculum, Desulfomonas, Thermodesulfobacterium, Desulfobulbus, Desulfobacter, Desulfococcus, Desulfonema, Desulfosarcina, Desulfobacterium, Desulforomas, and mixtures thereof.

The sulphate reducing microorganisms may be used together with other naturally occurring anaerobic bacteria belonging to the genera of Acidimicrobiales, Acidithiobacillales, Betaproteobacteriales, Bacteriodales, Clostridiales, Campylobacteriales, Desulfovibrionales, Enterobacteriales, Gammaproteobacteriales, Pseudomonadales, Methylococcales, and mixtures thereof. Typically, the bioreactor is filled with a starting culture, an inoculum of microorganisms that has been selected through natural selection.

The inoculum develops in a bioreactor to different process waters, pH and temperature during a period of for example 18 months prior to use, and its composition and the relative amounts of the different microorganisms changes over time. The sulphate reducing microbial culture may contain also other naturally occurring anaerobic microorganisms, microorganisms that can tolerate small quantities of oxygen and possibly also aerobic microorganisms.

The method may also comprise a further step, namely subjecting the effluent of the stripping arrangement to polishing to obtain clean water. The polishing may be carried out by any method known as such. For example, it may be carried out by increasing the pH and adding iron chloride, to remove the residual dissolved sulphides. Further, the effluent water may be treated by commercially available filter techniques, such as carbon filters, or ultra-filtration to remove any residual phosphates or dissolved organic compounds (DOC). These processes allow cleaning the effluent water to standards which allow either re-use of the water as process water or dispensing the water to nature. In the event very pure water has to be produced, polishing of water can be done using membrane systems. The bioprocess itself has a stabilizing effect on the water quality in regard of fouling and scaling properties (e.g. iron, manganese, calcium, phosphate and organics immobilized by the microorganisms).

According to an embodiment, the sulphate content of the sulphate containing wastewater is at least 100 mg/l. The sulphate content can be even 100-10000 mg/l. The concentration is reduced in the bioreactor, typically down to 11-1000 mg/l. The rate of reduction of the sulphate concentration can be for example 40-250 mg/l/h. The reaction time of the wastewater to be treated in the anaerobic bioreactor is thus typically from five to twenty six hours.

According to an example of a wastewater, it comprises the components listed in Table 1. It is however important to note that depending on the wastewater to be treated, the components and their amounts differ.

**Table 1**

| Component | Levels in a sample wastewater 1 (mg/l) | The required levels for microorganisms (mg/l) |
|---|---|---|
| SO₄²⁻ sulphate | 1000-2000 | 100 |
| Fe²⁻ iron | 0.1 | 0.3 |
| Zn zinc | 0.4 | < 0.4 |
| Ni nickel | 1 | < 1 |
| Mg magnesium | 350 | 6 |
| Mn manganese | < 1 | < 1 |
| K potassium | 26 | < 26 |
| Cu Copper | 2.7 | < 2 |

In this case (Table 1), a small amount of Fe²⁻ needs to be added to the bioreactor. The other required components are present in this exemplary wastewater sample. Some components are used in artificial growth medium for use for the present type of microorganisms, but they might not be required in the present method. It is believed that most components are naturally present in the wastewaters in sufficient amounts.

Table 2 illustrates some possible amounts of sources of nitrogen and phosphorus that can be added to the process. Again, their amounts depend on the wastewater to be treated.

**Table 2**

| Salt | Amount salt (mg/l) | Amount element (P or N) mg/l |
|---|---|---|
| Ammonium phosphate | 37 | 10 mg/l nitrogen and 24 mg/l phosphorus |
| Urea | 14 | 6.5 mg/l nitrogen |
| Total nitrogen | | 17 mg/l nitrogen |
| Total phosphorous | | 24 mg/l phosphorus |

The amount of nitrogen in Table 2 may for example in some instances be reduced to 7 mg/l, depending on the wastewater to be treated. The same applies to phosphorus, which may be used for example in an amount of 9 mg/l.

The present invention also relates to a system for carrying out the above method, the system comprising
- an anaerobic bioreactor comprising an inlet for the wastewater, an inlet for the electron donor, an inlet for the phosphate source, an inlet for the nitrogen source, an inlet for microorganisms and an outlet for a liquid comprising hydrogen sulphide;
- a stripping arrangement comprising an inlet for the liquid comprising hydrogen sulphide, an inlet for the inert gas, an outlet for a gas mixture comprising hydrogen sulphide and the inert gas, and an outlet for treated wastewater;
- a scrubber arrangement comprising an inlet for the gas mixture comprising hydrogen sulphide and the inert gas, an inlet for the hydroxide, an outlet for a carrier gas mainly consisting of the inert gas, and an outlet for the liquid comprising sulphide salt;
- an electrolytic cell comprising an inlet for the liquid comprising sulphide salt, an outlet for sulphur, an outlet for hydroxide and an outlet for hydrogen; and
- means for recycling the hydroxide from the electrolytic cell to the scrubber arrangement,

wherein in the electrolytic cell the anode is a nickel, titanium or platinum electrode, and the cathode is a nickel, titanium or platinum electrode,
wherein in the electrolytic cell, elemental sulphur is recovered at the anode, and hydrogen gas is recovered at the cathode
wherein the system is controlled so that the potential against an Ag/AgCl reference electrode is at a stable level with the value within the range of 300-500 mV.

According to an embodiment, the system comprises a single anaerobic bioreactor. The system may also comprise two anaerobic bioreactors arranged in series. The number of bioreactors depends on the desired concentration of the outgoing effluent, and it is possible to use any required number of bioreactors needed.

The system also naturally comprises all the required connections between the various parts, as well as required valves etc. The different parts will also have any other equipment required, such as means for controlling the temperature and pH of the bioreactor, as well as any further inlets and/or outlets as needed. For example, the bioreactor may comprise an inlet for feeding a pH-adjusting agent. The system also comprises any required safety arrangements, such as means for releasing pressure, sensors for controlling the process etc. It is also to be understood that any inlet and outlet in the system may be used for more than one product, depending in which form the products needed are fed or removed from the system. Further, it is to be understood that for example the inlet for the microorganisms may be the opening of the bioreactor, as the microorganisms may be fed to the bioreactor in the beginning, and no further microorganisms are required unless the process is completely stopped.

According to an embodiment, the stripping arrangement comprises an outlet for treated wastewater, connected to a polishing station for purifying the treated wastewater. The stripping arrangement may alternatively or additionally comprise means for recycling the inert gas.

The various embodiments and details described above in connection with the method apply *mutatis mutandis* to the system.

It is to be understood that the embodiments of the invention disclosed are not limited to the particular structures, process steps, or materials disclosed herein, as long as they fall within the scope of the appended claims.

It should also be understood that terminology employed herein is used for the purpose of describing particular embodiments only and is not intended to be limiting.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### DETAILED DESCRIPTION OF THE DRAWINGS

The present system is illustrated in more detail in the enclosed drawings, where like or similar reference numbers have been used for like or similar parts of the system. In the drawings, a same reference number is used for a given inlet or outlet and any piping or similar connected to it, for sake of clarity of the drawings.

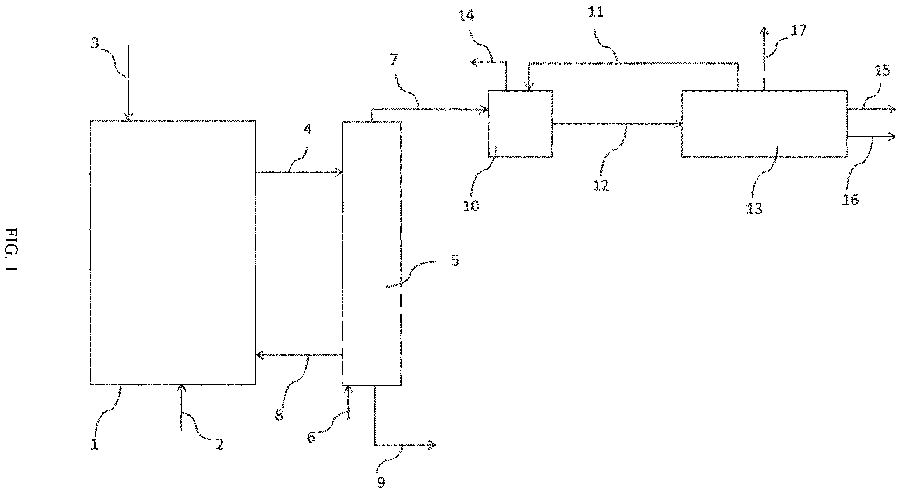

Figure 1 schematically illustrates a system according to an embodiment. The system comprises an upflow anaerobic bioreactor 1 comprising of carrier and a biofilm comprising a culture of naturally existing microorganisms (fed to the bioreactor via an opening not illustrated in the drawing). The bioreactor 1 comprises a pipe and an inlet 2 for the wastewater, a pipe and an inlet 3 for the electron donor, phosphate and nitrogen, and an outlet and pipe 4 for the liquid comprising the sulphide species (H₂S(aq), HS⁻(aq) and S²⁻(aq)), obtained from the anaerobic microbial conversion of sulphate contained in the wastewater.

The system also comprises a stripping arrangement 5 comprising an inlet for the liquid comprising the sulphide species (connected to the pipe 4) as well as a pipe and an inlet 6 for the inert gas. The stripping arrangement 5 also comprises an outlet and pipe 7 for a gas comprising hydrogen sulphide, carbon dioxide and the inert gas as well as a pipe and an outlet 8 for the liquid recycled back to the bioreactor which connects the stripping arrangement 5 with the bioreactor 1. The treated liquid is recovered from the stripping tower through a pipe 9.

The system still further comprises a scrubber 10 comprising an inlet for the gas comprising hydrogen sulphide (connected to the pipe 7), an inlet and pipe 11 for the hydroxide, and an outlet and pipe 12 for the liquid comprising sulphide. Both the pipe 11 and the pipe 12 are connected to an electrolytic cell 13 via outlet for hydroxide and an inlet for the liquid comprising sulphide. The scrubber 10 also comprises an outlet and pipe 14 of excess inert gas to balance the pressure of the system.

The electrolytic cell 13 also comprises an outlet 15 for sulphur and an outlet 16 for hydrogen, as well as is connected to electrical mains (not shown). The means for recycling the hydroxide from the electrolytic cell to the scrubber is thus the pipe 11, connecting the two parts of the system. The cell also comprises of a pipe 17 to recover excess hydroxide.

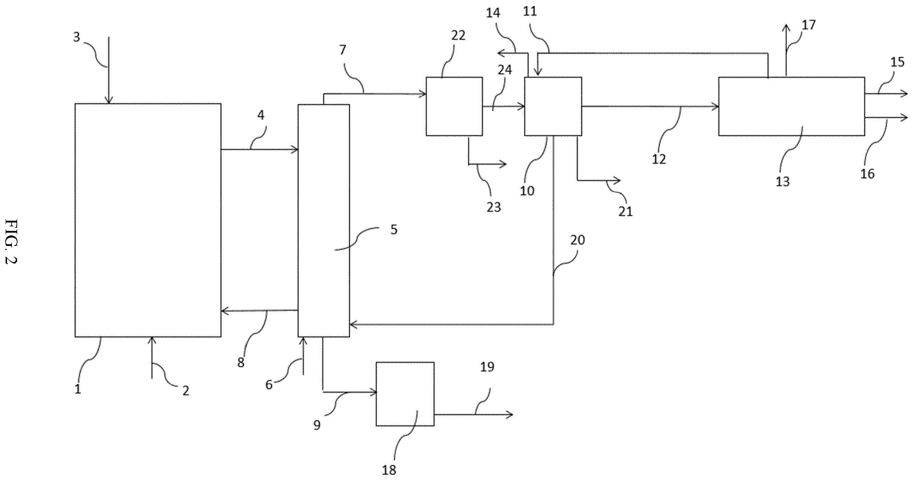

Figure 2 schematically illustrates a system according to another embodiment. In this embodiment, in addition to the parts disclosed in Figure 1, the outlet 9 for treated wastewater of the stripping arrangement is connected to a polishing station 18 for purifying the treated wastewater. Purified water is thus dispensed via an outlet and pipe 19 of the polishing station. The stripping arrangement 5 of this embodiment comprises means for recycling the inert gas, as an arrangement of pipes 20, connecting the scrubber 10 with the stripping arrangement 5. The scrubber 10 comprises an outlet 21 for the sulphide, in case it is to be used as such and not converted to hydrogen and sulphur.

The system of Figure 2 also comprises a carbonate collection reactor 22, into which the gas comprising sulphide and carbon dioxide is directed, via pipe 7, for carrying out the precipitation step. The precipitation reaction forming inorganic carbon species (CO₂(aq), CO₃(aq) and HCO₃(aq), calcium carbonate and/or calcium bicarbonate or mixture thereof) is carried out for a period of time, and the precipitate removed via outlet and pipe 23. The sulphide continues to the scrubber 10, via outlet and pipe 24.

### EXPERIMENTAL PART

An upflow anaerobic bioreactor (576 L) with 91 % active volume and a 73 % liquid volume was used, filled with AA64 carriers (Ingenjörsfirma Anders Löfqvist; 980m²/m³) actively occupying 14 % of the active volume of the bioreactor. The bioreactor was filled with inoculum from Research Institute of Sweden (RISE) strain collection that has been selected through natural selection and developed in the bioreactor to different process waters, pH and temperature during a period of 18 months prior to the experiment described below. The starting culture consisted a microbiome of sulphate reducing microorganisms that are naturally occurring in nature, from the taxonomic orders of Acidimicrobiales, Acidithiobacillales, Betaproteobacteriales, Bacteriodales, Clostridiales, Campylobacteriales, Desulfovibrionales, Enterobacteriales, Gammaproteobacteriales, Pseudomonadales, Methylococcales.

In one experiment, wastewater comprising 0.23 wt-% of SO₄, i.e. 2.3 kg of SO₄²⁻/ m³ was fed to a fixed bed bioreactor, along with 0.62 kg/m³ of methanol and 41 g/m³ of diammonium phosphate and 14 g/m³ urea. pH of the reactor was 8.2 and its temperature 10 °C.

The continuous process had a hydrolytic retention time of 27 hours. The bioreactor was stripped with nitrogen, 0.32 L of nitrogen per L of liquid volume per h. The effluent liquid was continuously led to a stripping tower in which the hydrogen sulphide was stripped into a gas phase using 4 L of nitrogen per L of liquid volume per h. The effluent gas, comprising hydrogen sulphide (0.3 vol-%) and carbon dioxide (0.3 vol-%) was then led to a scrubber, where the hydrogen sulphide containing gas phase was converted to disodium sulphide (Na₂S: 17.3 ± 1.3 kg/m³ or the corresponding sulphide concentration S²⁻: 7.1 ± 0.5 kg/m³), using sodium hydroxide. The scrubber was operating in a continuous mode at a rate of 4 kg/m³/h, where the hydraulic retention time was 8h. pH was kept stable at 13.3 ± 0.06. The feeding liquid resembled that coming out of the electrolysis cell with a sulphide concertation of 3 kg/m³ and with a concentration of sodium hydroxide of 100 kg/m³.

The liquid comprising disodium sulphide (19 kg/m³) and disodium carbonate (8 kg/m³) was then led to an electrolysis cell, where the anode was made of titan and the cathode of titan. The residence time in the electrolysis cell was 50 minutes and the sulphide oxidation yield was 53 %. Electricity with a potential of (3.5 V) was led to the electrolysis and elemental sulphur was recovered by scraping the anode. Hydrogen gas, at a yield of 1.67 kWh H₂/kg sulphide was recovered at the cathode. Effluent water contained 3 kg/m³ sulphide, approximately 100 kg/m³ sodium hydroxide and a pH of 13.5.

Effluent water from the stripping tower comprised of 670 g/m³ of SO₄²⁻, 12 g/m³ of NH₄, 31 g/m³ of PO₄³⁻, and 2 kg/m³ of sludge. The sludge comprised cell biomass (approximately 0.6 kg/m³) and inorganic sludge (approximately 1.3 kg/m³).

The sulphur was washed to remove any sodium and carbonate species. The concentration of the residual sulphur was 98.6% sulphur.

## Claims

1. A method for purifying sulphate containing wastewater and recovering sulphur and hydrogen, comprising
- in an anaerobic bioreactor, converting sulphates in the sulphate containing wastewater to hydrogen sulphide, using sulphate reducing microorganisms and an electron donor, a phosphate source and a nitrogen source;
- in a stripping arrangement, stripping the hydrogen sulphide into a gas phase using an inert gas;
- in a scrubber arrangement, converting the hydrogen sulphide containing gas phase to a sulphide salt, using a hydroxide;
- subjecting the sulphide salt to electrolysis; and
- recovering hydrogen gas, hydroxide and sulphur from the electrolysis,
wherein in the electrolysis, the anode is a nickel, titanium or platinum electrode, and the cathode is a nickel, titanium or platinum electrode,
wherein in the electrolysis, elemental sulphur is recovered at the anode, and hydrogen gas is recovered at the cathode, and
wherein the system is controlled so that the potential against an Ag/AgCl reference electrode is at a stable level with the value within the range of 300-500 mV.

2. The method according to claim 1, wherein the electron donor is selected from a group consisting of methanol, ethanol, formate, acetate, lactate and mixtures thereof.

3. The method according to claim 1 or 2, further comprising recycling the hydroxide from the electrolysis to the scrubber arrangement.

4. The method according to any one of the preceding claims, wherein the pH within the bioreactor is 4.0-9.0.

5. The method according to any one of the preceding claims, wherein the temperature within the bioreactor is 2-35 °C.

6. The method according to any one of the preceding claims, wherein the sulphate reducing microorganism is selected from a group consisting of species of the genera Desulfovibrio, Desulfotomaculum, Desulfomonas, Thermodesulfobacterium, Desulfobulbus, Desulfobacter, Desulfococcus, Desulfonema, Desulfosarcina, Desulfobacterium, Desulforomas, and mixtures thereof, and wherein the microorganisms preferably further comprise at least one of anaerobic bacteria belonging to the genera of Acidimicrobiales, Acidithiobacillales, Betaproteobacteriales, Bacteriodales, Clostridiales, Campylobacteriales, Desulfovibrionales, Enterobacteriales, Gammaproteobacteriales, Pseudomonadales, and Methylococcales.

7. The method according to any one of the preceding claims, further comprising subjecting an effluent of the stripping arrangement to polishing to obtain clean water.

8. The method according to any one of the preceding claims, wherein the sulphate content of the sulphate containing wastewater is at least 100 mg/l.

9. The method according to any one of the preceding claims, wherein both the anode and the cathode are nickel electrodes

10. A system for carrying out the method of claim 1, comprising
- an anaerobic bioreactor comprising an inlet for the wastewater, an inlet for the electron donor, an inlet for the phosphate source, an inlet for the nitrogen source, an inlet for microorganisms and an outlet for a liquid comprising hydrogen sulphide;
- a stripping arrangement comprising an inlet for the liquid comprising hydrogen sulphide, an inlet for the inert gas, an outlet for a gas mixture comprising hydrogen sulphide and the inert gas, and an outlet for treated wastewater;
- a scrubber arrangement comprising an inlet for the gas mixture comprising hydrogen sulphide and the inert gas, an inlet for the hydroxide, an outlet for a carrier gas mainly consisting of the inert gas, and an outlet for the liquid comprising sulphide salt;
- an electrolytic cell comprising an inlet for the liquid comprising sulphide salt, an outlet for sulphur, an outlet for hydroxide and an outlet for hydrogen; and
- means for recycling the hydroxide from the electrolytic cell to the scrubber arrangement
wherein in the electrolytic cell the anode is a nickel, titanium or platinum electrode, and the cathode is a nickel, titanium or platinum electrode,
wherein in the electrolytic cell, elemental sulphur is recovered at the anode, and hydrogen gas is recovered at the cathode
wherein the system is controlled so that the potential against an Ag/AgCl reference electrode is at a stable level with the value within the range of 300-500 mV.

11. The system according to claim 10, wherein the system comprises a single anaerobic bioreactor.

12. The system according to claim 10 or 11, wherein the stripping arrangement comprises an outlet for treated wastewater, connected to a polishing station for purifying the treated wastewater.

13. The system according to any one of the claims 10-12, wherein the stripping arrangement comprises means for recycling the inert gas.

## Patentansprüche

1. Verfahren zur Reinigung von sulfathaltigem Abwasser und Rückgewinnung von Schwefel und Wasserstoff, umfassend
- Umwandeln von Sulfaten im sulfathaltigen Abwasser in einem anaeroben Bioreaktor unter Verwendung von sulfatreduzierenden Mikroorganismen und einem Elektronendonor, einer Phosphatquelle und einer Stickstoffquelle in Schwefelwasserstoff;
- Abscheiden des Schwefelwasserstoffs in einer Abscheidungsanordnung unter Verwendung eines Inertgases in eine Gasphase;
- Umwandeln der schwefelwasserstoffhaltigen Gasphase in einer Wäscheranordnung unter Verwendung eines Hydroxids in ein Sulfidsalz;
- Unterziehen des Sulfidsalzes einer Elektrolyse; und
- Rückgewinnen von Wasserstoffgas, Hydroxid und Schwefel aus der Elektrolyse,
wobei bei der Elektrolyse die Anode eine Nickel-, Titan- oder Platinelektrode ist und die Kathode eine Nickel-, Titan- oder Platinelektrode ist,
wobei bei der Elektrolyse elementarer Schwefel an der Anode rückgewonnen wird und Wasserstoffgas an der Kathode rückgewonnen wird, und
wobei das System so gesteuert wird, dass das Potential gegenüber einer Ag/AgCl-Referenzelektrode auf einem stabilen Niveau mit einem Wert im Bereich von 300-500 mV liegt.

2. Verfahren nach Anspruch 1, wobei der Elektronendonor aus einer Gruppe ausgewählt wird, die aus Methanol, Ethanol, Formiat, Acetat, Lactat und Mischungen davon besteht.

3. Verfahren nach Anspruch 1 oder 2, das weiter Rückgewinnen des Hydroxids aus der Elektrolyse zur Wäscheranordnung umfasst.

4. Verfahren nach einem der vorstehenden Ansprüche, wobei der pH-Wert im Bioreaktor 4,0-9,0 beträgt.

5. Verfahren nach einem der vorstehenden Ansprüche, wobei die Temperatur im Bioreaktor 2-35 °C beträgt.

6. Verfahren nach einem der vorstehenden Ansprüche, wobei der sulfatreduzierende Mikroorganismus aus einer Gruppe ausgewählt ist, die aus Arten der Gattungen Desulfovibrio, Desulfotomaculum, Desulfomonas, Thermodesulfobacterium, Desulfobulbus, Desulfobacter, Desulfococcus, Desulfonema, Desulfosarcina, Desulfobacterium, Desulforomas und Mischungen davon besteht, und wobei die Mikroorganismen vorzugsweise weiter mindestens eines der anaeroben Bakterien umfassen, die zu den Gattungen Acidimicrobiales, Acidithiobacillales, Betaproteobacteriales, Bacteriodales, Clostridiales, Campylobacteriales, Desulfovibrionales, Enterobacteriales, Gammaproteobacteriales, Pseudomonadales und Methylococcales gehören.

7. Verfahren nach einem der vorstehenden Ansprüche, das weiter Unterziehen eines Abflusses der Abscheidungsanordnung einem Polieren zum Erhalten von sauberem Wasser umfasst.

8. Verfahren nach einem der vorstehenden Ansprüche, wobei der Sulfatgehalt des sulfathaltigen Abwassers mindestens 100 mg/I beträgt.

9. Verfahren nach einem der vorstehenden Ansprüche, wobei sowohl die Anode als auch die Kathode Nickelelektroden sind.

10. System zum Ausführen des Verfahrens nach Anspruch 1, umfassend
- einen anaeroben Bioreaktor, der einen Einlass für das Abwasser, einen Einlass für den Elektronendonor, einen Einlass für die Phosphatquelle, einen Einlass für die Stickstoffquelle, einen Einlass für Mikroorganismen und einen Auslass für eine Schwefelwasserstoff umfassende Flüssigkeit umfasst;
- eine Abscheidungsanordnung, die einen Einlass für die Schwefelwasserstoff umfassende Flüssigkeit, einen Einlass für das Inertgas, einen Auslass für ein Gasgemisch, das Schwefelwasserstoff und dem Inertgas umfasst, und einen Auslass für behandeltes Abwasser umfasst;
- eine Wäscheranordnung, die einen Einlass für das Gasgemisch, das Schwefelwasserstoff und Inertgas umfasst, einen Einlass für das Hydroxid, einen Auslass für ein Trägergas, das hauptsächlich aus dem Inertgas besteht, und einen Auslass für die Sulfidsalz umfassende Flüssigkeit umfasst;
- eine Elektrolysezelle, die einen Einlass für die Sulfidsalz umfassende Flüssigkeit, einen Auslass für Schwefel, einen Auslass für Hydroxid und einen Auslass für Wasserstoff umfasst; und
- Mittel zum Rückführen des Hydroxids aus der Elektrolysezelle zur Wäscheranordnung
wobei in der Elektrolysezelle die Anode eine Nickel-, Titan- oder Platinelektrode ist und die Kathode eine Nickel-, Titan- oder Platinelektrode ist,
wobei in der Elektrolysezelle elementarer Schwefel an der Anode rückgewonnen wird und Wasserstoffgas an der Kathode rückgewonnen wird
wobei das System so gesteuert wird, dass das Potential gegenüber einer Ag/AgCl-Referenzelektrode auf einem stabilen Niveau mit einem Wert im Bereich von 300-500 mV liegt.

11. System nach Anspruch 10, wobei das System einen einzelnen anaeroben Bioreaktor umfasst.

12. System nach Anspruch 10 oder 11, wobei die Abscheidungsanordnung einen Auslass für behandeltes Abwasser umfasst, der mit einer Polierstation zum Reinigen des behandelten Abwassers verbunden ist.

13. System nach einem der Ansprüche 10-12, wobei die Abscheidungsanordnung Mittel zum Rückgewinnen des Inertgases umfasst.

## Revendications

1. Procédé pour purifier des eaux usées contenant des sulfates et récupérer le soufre et l'hydrogène, comprenant
- dans un bioréacteur anaérobie, la conversion des sulfates dans les eaux usées contenant des sulfates en sulfure d'hydrogène, l'utilisation de micro-organismes réducteurs de sulfates et d'un donneur d'électrons, d'une source de phosphate et d'une source d'azote ;
- dans un agencement de strippage, le strippage du sulfure d'hydrogène en une phase gazeuse à l'aide d'un gaz inerte ;
- dans un agencement d'épurateur, la conversion de la phase gazeuse contenant du sulfure d'hydrogène en un sel de sulfure, à l'aide d'un hydroxyde ;
- la soumission du sel de sulfure à une électrolyse ; et
- la récupération de l'hydrogène gazeux, de l'hydroxyde et du soufre provenant de l'électrolyse,
dans lequel, dans l'électrolyse, l'anode est une électrode en nickel, en titane ou en platine et la cathode est une électrode en nickel, en titane ou en platine,
dans lequel, dans l'électrolyse, du soufre élémentaire est récupéré au niveau de l'anode et de l'hydrogène gazeux est récupéré au niveau de la cathode, et
dans lequel le système est commandé de telle sorte que le potentiel par rapport à une électrode de référence en Ag/AgCl soit à un niveau stable avec la valeur dans la plage de 300-500 mV.

2. Procédé selon la revendication 1, dans lequel le donneur d'électrons est choisi dans un groupe constitué par le méthanol, l'éthanol, le formiate, l'acétate, le lactate et des mélanges de ceux-ci.

3. Procédé selon la revendication 1 ou 2, comprenant en outre le recyclage de l'hydroxyde provenant de l'électrolyse vers l'agencement d'épurateur.

4. Procédé selon l'une quelconque des revendications précédentes, dans lequel le pH à l'intérieur du bioréacteur est 4,0-9,0.

5. Procédé selon l'une quelconque des revendications précédentes, dans lequel la température de recuit à l'intérieur du bioréacteur est 2-35 °C.

6. Procédé selon l'une quelconque des revendications précédentes, dans lequel le micro-organisme réducteur de sulfate est choisi dans un groupe constitué par des espèces des genres Desulfovibrio, Desulfotomaculum, Desulfomonas, Thermodesulfobacterium, Desulfobulbus, Desulfobacter, Desulfococcus, Desulfonema, Desulfosarcina, Desulfobacterium, Desulforomas, et des mélanges de ceux-ci, et dans lequel les micro-organismes comprennent, de préférence, en outre au moins une bactérie anaérobie appartenant aux genres Acidimicrobiales, Acidithiobacillales, Betaproteobacteriales, Bacteriodales, Clostridiales, Campylobacteriales, Desulfovibrionales, Enterobacteriales, Gammaproteobacteriales, Pseudomonadales et Methylococcales.

7. Procédé selon l'une quelconque des revendications précédentes, comprenant en outre la soumission d'un effluent de l'agencement de strippage à un affinage pour obtenir de l'eau propre.

8. Procédé selon l'une quelconque des revendications précédentes, dans lequel la teneur en sulfate des eaux usées contenant des sulfates est au moins 100 mg/I.

9. Procédé selon l'une quelconque des revendications précédentes, dans lequel à la fois l'anode et la cathode sont des électrodes en nickel.

10. Système pour mettre en œuvre le procédé selon la revendication 1, comprenant
- un bioréacteur anaérobie comprenant un orifice d'entrée pour les eaux usées, un orifice d'entrée pour le donneur d'électrons, un orifice d'entrée pour la source de phosphate, un orifice d'entrée pour la source d'azote, un orifice d'entrée pour les micro-organismes et un orifice de sortie pour un liquide comprenant du sulfure d'hydrogène ;
- un agencement de strippage comprenant un orifice d'entrée pour le liquide comprenant du sulfure d'hydrogène, un orifice d'entrée pour le gaz inerte, un orifice de sortie pour un mélange gazeux comprenant du sulfure d'hydrogène et le gaz inerte, et un orifice de sortie pour les eaux usées traitées ;
- un agencement d'épurateur comprenant un orifice d'entrée pour le mélange gazeux comprenant du sulfure d'hydrogène et le gaz inerte, un orifice d'entrée pour l'hydroxyde, un orifice de sortie pour un gaz porteur composé principalement du gaz inerte, et un orifice de sortie pour le liquide comprenant du sel de sulfure ;
- une cellule électrolytique comprenant un orifice d'entrée pour le liquide comprenant un sel de sulfure, un orifice de sortie pour le soufre, un orifice de sortie pour l'hydroxyde et un orifice de sortie pour l'hydrogène ; et
- des moyens de recyclage de l'hydroxyde à partir de la cellule électrolytique vers l'agencement d'épurateur
dans lequel, dans la cellule électrolytique, l'anode est une électrode en nickel, en titane ou en platine et la cathode est une électrode en nickel, en titane ou en platine,
dans lequel, dans la cellule électrolytique, du soufre élémentaire est récupéré au niveau de l'anode et de l'hydrogène gazeux est récupéré au niveau de la cathode
dans lequel le système est commandé de telle sorte que le potentiel par rapport à une électrode de référence en Ag/AgCl soit à un niveau stable avec la valeur dans la plage de 300-500 mV.

11. Système selon la revendication 10, dans lequel le système comprend un seul bioréacteur anaérobie.

12. Système selon la revendication 10 ou 11, dans lequel l'agencement de strippage comprend un orifice de sortie pour des eaux usées traitées, relié à une station d'affinage pour purifier les eaux usées traitées.

13. Système selon l'une quelconque des revendications 10-12, dans lequel l'agencement de strippage comprend des moyens pour recycler le gaz inerte.
